# EUROPÄISCHE PATENTSCHRIFT

(11) **EP 1 526 261 B1**
(45) Veröffentlichungstag und Bekanntmachung des Hinweises auf die Patenterteilung: **26.07.2006**
(21) Anmeldenummer: 03103927.4
(22) Anmeldetag: 23.10.2003
(51) Int. Cl.: F02B 27/02

(54) **Vorrichtung zur Steuerung eines Strömungsflusses in einem Ansaugkrümmer**
Device for the control of a flow in an intake manifold
Dispositif de commande d'un courant dans un collecteur d'admission

(43) Veröffentlichungstag der Anmeldung: 27.04.2005
(73) Patentinhaber: Ford Global Technologies, LLC, A subsidary of Ford Motor Company, Dearborn, MI 48126 (US)
(72) Erfinder: Figura, Michael Georg, 41542, Dormagen (DE); Kluge, Torsten, 51491, Overath (DE)
(74) Vertreter: Drömer, Hans-Carsten

(56) Entgegenhaltungen:
- EP-A- 0 995 019
- EP-A- 1 167 717
- DE-A- 3 740 403
- DE-C- 4 003 492

## Beschreibung

Die Erfindung betrifft eine Vorrichtung zur Steuerung eines Strömungsflusses, welche insbesondere im Ansaugkrümmer einer Brennkraftmaschine verwendet werden kann.

Moderne Brennkraftmaschinen sind häufig mit einem Ansaugkrümmer variabler Geometrie ausgestattet, damit die Strömungsverhältnisse im Ansaugbereich den jeweiligen Motorbetriebsbedingungen optimal angepaßt werden können. Der Ansaugkrümmer ist dabei typischerweise mit steuerbaren Klappen oder Zylindern ausgestattet, um die Länge des Ansaugkanals zu variieren. Nachteilig an derartigen Systemen ist, daß diese in der Regel nur eine begrenzte Anzahl von Einstellungspositionen annehmen können. Zudem sind die Platzanforderungen der Systeme verhältnismäßig hoch, und die komplexe Mechanik mit Lagerungen, Hebeln und Aktuatoren verursacht einen hohen Kostenaufwand.

Des Weiteren ist aus der US 4 928 638 ein Ansaugkrümmer für eine Brennkraftmaschine bekannt, bei welchem ein sich längs des Ansaugkanals erstreckender aufblasbarer Ballon zur Veränderung des Querschnitts des Ansaugweges eingesetzt wird. Allerdings kann hiermit nicht die Länge des Strömungsweges verändert werden, und im nicht aufgeblasenen Zustand kann der entspannte Ballon sich störend auf die Strömungsbewegung auswirken.

In der EP 1 167 716 A1 ist ein Ansaugkrümmer einer Brennkraftmaschine offenbart, dessen Strömungsgeometrie durch ein flexibles, vorhangähnliches Element variiert werden kann. Das genannte Element wird von einer Vorspannfeder an einem Ende in Richtung einer maximalen Streckung gezogen und ist am gegenüberliegenden Ende auf einer Welle aufgewickelt. Mit einem an die Welle angeschlossenen Motor kann das Ausmaß der Aufwicklung gesteuert und damit die wirksame Länge des flexiblen Elementes im Strömungskanal verändert werden.

Vor diesem Hintergrund war es Aufgabe der vorliegenden Erfindung, Mittel zur kostengünstigen, zuverlässigen Steuerung eines Strömungsflusses bereitzustellen.

Diese Aufgabe wird durch eine Vorrichtung mit den Merkmalen des Anspruchs 1 sowie durch einen Strömungskanal mit den Merkmalen des Anspruchs 8 bzw. 10. gelöst. Vorteilhafte Ausgestaltungen sind in den Unteransprüchen enthalten.

Die erfindungsgemäße Vorrichtung gemäß Anspruch 1 dient der Steuerung eines Strömungsflusses, bei dem es sich zum Beispiel um die Strömung der Ansaugluft im Ansaugkrümmer einer Brennkraftmaschine handeln kann. Die Vorrichtung kann darüber hinaus jedoch in allen Situationen verwendet werden, in denen Strömungen bzw. Strömungswege kontrolliert verändert werden sollen. Die Vorrichtung enthält ein flexibles Strömungsleitelement, welches steuerbar zwischen einer aufgerollten Konfiguration und einer extendierten Konfiguration verändert werden kann.

Die Flexibilität des Strömungsleitelements ermöglicht, daß dieses verschiedene räumliche Formen bzw. Konfigurationen annehmen kann. Die verschiedenen Konfigurationen wirken sich dabei unterschiedlich auf einen Strömungsfluß aus, wobei keine aufwändigen mechanischen Elemente wie Lager oder Hebel erforderlich sind. Des Weiteren ist wichtig, daß das Strömungsleitelement in eine aufgerollte Konfiguration gebracht werden kann, in welcher es eine sehr kompakte Form besitzt und damit effektiv aus einem Strömungsfluß herausgenommen werden kann.

Vorzugsweise kann das Strömungsleitelement nicht nur zwischen der aufgerollten Konfiguration und der extendierten Konfiguration hin und her geschaltet werden, sondern auch stufenweise oder kontinuierlich Konfigurationen zwischen diesen Extrempositionen stationär, das heißt so lange wie erwünscht annehmen. Auf diese Weise ist es zum Beispiel möglich, mit dem Strömungsleitelement einen Strömungsweg kontinuierlich zu verändern oder einen Strömungsdurchlaß graduell zu öffnen bzw. zu schließen.

Gemäß einer bevorzugten Ausgestaltung der Vorrichtung enthält das Strömungsleitelement ein Vorspannmittel, welches es entweder in die aufgerollte Konfiguration oder in die extendierte Konfiguration vorspannt. Für eine gesteuerte Konfigurationsveränderung des Strömungsleitelementes muß daher nur noch in eine Richtung eine aktive Kraft aufgebracht werden. Bei Abschalten bzw. Nachlassen dieser Kraft wird das Strömungsleitelement dann "automatisch" von dem Vorspannmittel in die "Ruhekonfiguration" überführt.

Bei dem vorstehend genannten Vorspannmittel kann es sich insbesondere um eine im Ruhezustand spiralförmig aufgerollte Feder handeln, welche das Strömungsleitelement in dessen aufgerollte Konfiguration vorspannt. Die Auswahl der aufgerollten Konfiguration als die durch das Vorspannmittel vorgegebene Ruhekonfiguration hat in vielen Fällen den Vorteil, daß bei einer Störung bzw. einem Ausfall der aktiven Mittel zur Konfigurationsänderung ein Sicherheitszustand angenommen wird, in dem das Strömungsleitelement kompakt eingerollt und effektiv aus dem Strömungsgeschehen herausgenommen ist.

Für die gesteuerte Konfigurationsänderung des Strömungsleitelementes können verschiedene Mechanismen vorgesehen werden. Erfindungsgemäß enthält das Strömungsleitelement einen Hohlraum, welcher bei Füllung mit einem unter Druck stehenden Fluid wie beispielsweise Druckluft eine Form annimmt, die der extendierten Konfiguration des Strömungsleitelementes entspricht. Mit anderen Worten kann das Strömungsleitelement hydraulisch bzw. durch Aufblasen in eine bestimmte Konfiguration überführt werden, wobei durch Anhalten des Druckes bzw. der (Gas-)Füllung bei einem bestimmten Stand auch jede Zwischenkonfiguration angesteuert und gehalten werden kann. Die hydraulisch gesteuerte Konfigurationsänderung läßt sich insbesondere dadurch erreichen, daß der genannte Hohlraum in der Zielkonfiguration, die bei Anwendung eines maximalen Druckes angenommen wird, ein maximales Volumen aufweist. Typischerweise ist dies in der extendierten Konfiguration des Strömungsleitelementes der Fall, während der Hohlraum in der aufgerollten Konfiguration ein minimales Volumen (insbesondere das Volumen Null) hat. Die extendierte Konfiguration des Strömungsleitelementes kann dabei insbesondere eine gerade gestreckte Form des Strömungsleitelementes sein.

Gemäß einer Weiterbildung der Vorrichtung enthält diese stationäre Stützelemente wie beispielsweise Stäbe, Stege oder Flügel, mit denen das Strömungsleitelement in Kontakt kommt, wenn es von der aufgerollten in die extendierte Konfiguration überführt wird. Die Stützelemente führen das Strömungsleitelement bei seiner Bewegung in die extendierte Konfiguration und stabilisieren es gleichzeitig, indem sie ihm die Möglichkeit zur Abstützung an ortsfesten Strukturen bieten. Insbesondere sind die Stützelemente daher an derjenigen Seite des Strömungsleitelementes angeordnet, zu der es unter der Wirkung einer zu steuernden Strömung gedrückt wird. Eine weitere Funktion der Stützelemente besteht darin, daß sie in Zusammenwirkung mit dem Strömungsleitelement eine bestimmte Geometrie des Strömungsraumes erzeugen. Beispielsweise können die Stützelemente den Rand einer Durchflußöffnung für die Strömung bilden, wobei diese Öffnung durch das Strömungsleitelement in steuerbarer Weise geschlossen werden kann.

Die Erfindung betrifft ferner einen Strömungskanal mit einem variablen Strömungsweg, bei dem es sich insbesondere um den Ansaugkrümmer einer Brennkraftmaschine handeln kann. Der Strömungskanal ist dadurch gekennzeichnet, daß er eine Vorrichtung der oben beschriebenen Art enthält. Das heißt, daß er ein flexibles Strömungsleitelement aufweist, welches steuerbar zwischen einer aufgerollten Konfiguration und einer extendierten Konfiguration verändert werden kann. Das Strömungsleitelement kann dabei optional in jeder der oben beschriebenen Weisen weitergebildet sein.

Das Strömungsleitelement kann insbesondere so in dem Strömungskanal angeordnet sein, daß dieser durch das Strömungsleitelement variabel in zwei gegenläufig durchströmte Kammern unterteilt wird. Z. B. kann das Strömungsleitelement die Trennwand zwischen den genannten Kammern bilden, so daß die effektive Länge des Strömungsweges, die sich aus den gegenläufigen Strömungswegen in den beiden Kammern zusammensetzt, gezielt verändert werden kann.

Gemäß einer anderen Ausführungsform des Strömungskanals weist dieser mindestens zwei Vorrichtungen der oben beschriebenen Art auf, wobei die Strömungsleitelemente dieser Vorrichtungen einen überlappenden Bewegungsbereich haben. Zum Beispiel können zwei gleichartig ausgebildete Strömungsleitelemente spiegelbildlich zueinander angeordnet werden, so daß sie aus entgegengesetzten Richtungen in einen gemeinsamen Bewegungsbereich eingeführt werden können.

Auf diese Weise kann zum Beispiel zwischen den beiden Strömungsleitelementen eine Durchflußöffnung variabler Breite und variabler Position gebildet werden.

Im Folgenden wird die Erfindung mit Hilfe der Figuren beispielhaft näher erläutert. Es zeigen:
- Fig. 1: einen schematischen Querschnitt durch einen Ansaugkrümmer mit einem erfindungsgemäßen Strömungsleitelement in dessen extendierter Konfiguration;
- Fig. 2: den Ansaugkrümmer von Figur 1 mit dem Strömungsleitelement in dessen aufgerollter Konfiguration, und
- Fig. 3: einen Schnitt durch den Ansaugkrümmer von Figur 2 entlang der Linie III-III.

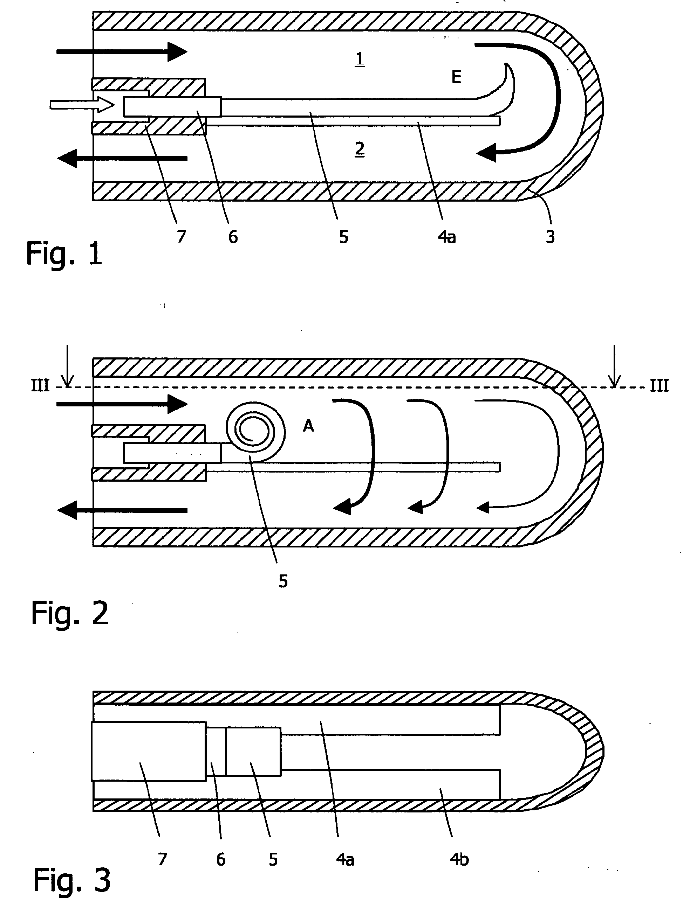

In den Figuren 1 und 2 ist in einem seitlichen Querschnitt ein Gehäuse 3 erkennbar, welches äußerlich die Form eines linksseitig offenen und rechtsseitig geschlossenen Rohres aufweist. Das Gehäuse kann dabei insbesondere im Ansaugweg einer Brennkraftmaschine (nicht dargestellt) angeordnet sein. An der in den Figuren linken, offenen Seite weist das Gehäuse mittig eine Unterteilung auf, durch welche es geometrisch in eine primäre, obere Kammer 1 und eine sekundäre, untere Kammer 2 geteilt wird. Diese Unterteilung wird entlang der Mittelachse des Gehäuses 3 durch Stützelemente bzw. -stege 4a, 4b fortgesetzt, die entlang der Innenwand des Gehäuses 3 verlaufen und zwischen sich einen Öffnungsspalt lassen. Eine Aufsicht auf die Stützstege 4a, 4b ist in Figur 3 erkennbar, welche einen Schnitt entlang der Linie III-III von Figur 2 zeigt.

Die primäre Kammer 1 ist an der in den Figuren linken Seite in nicht näher dargestellter Weise an eine Luftzufuhr angeschlossen, zum Beispiel den Luftfilter des Kraftfahrzeuges. Die sekundäre Kammer 2 ist dagegen an der in den Figuren linken Seite in nicht näher dargestellter Weise an eine Luftsenke angeschlossen, zum Beispiel den Luftverteilerkasten der Brennkraftmaschine. Das Gehäuse 3 kann dabei ganz oder teilweise in andere Motorkomponenten integriert sein, zum Beispiel die primäre Kammer 1 als Teil des Filtergehäuses und/oder die sekundäre Kammer 2 als Teil des Luftverteilerkastens.

Während des Betriebs der Einrichtung strömt Luft in die primäre Kammer 1 ein, tritt in die sekundäre Kammer 2 über und verläßt diese über deren Auslaß wieder (siehe Pfeile). Bei dem in Figur 1 dargestellten Zustand kann die Luft dabei nur am rechten Ende des Rohres in die sekundäre Kammer 2 übertreten. Die effektive Länge des Strömungsweges der Luft im Gehäuse 3 ist daher verhältnismäßig groß.

Um die Strömungsverhältnisse im Gehäuse 3 steuerbar verändern zu können, ist ein flexibles Strömungsleitelement 5 in dem Gehäuse 3 vorgesehen. Das Strömungsleitelement 5 ist an ein Steuerdruckrohr 6 angeschlossen, welches an der in den Figuren linken Seite des Gehäuses 3 im Zentrum der Gehäuseöffnung fixiert ist. Das Steuerdruckrohr 6 ist in nicht näher dargestellter Weise an eine Druckquelle angeschlossen, über die ein Hydraulikfluid wie beispielsweise Druckluft in steuerbarer Weise zugeführt werden kann.

Das Strömungsleitelement 5 besteht aus einem flexiblen, flachen, rechtsseitig geschlossenen Schlauch, welcher an der offenen Seite dicht mit dem Steuerdruckrohr 6 verbunden ist. Weiterhin enthält das Strömungsleitelement 5 ein in den Figuren nicht näher erkennbares Vorspannelement, das zum Beispiel als eine Stahl-(Blatt-)Feder ausgebildet ist, die sich in ihrem Ruhezustand spiralförmig aufrollt. Die Feder erstreckt sich dabei parallel zum Luftschlauch des Strömungsleitelementes 5, so daß es diesen bei einer Aufrollbewegung in die Ruhekonfiguration mitnimmt. Das gesamte Strömungsleitelement 5 nimmt daher im Ruhezustand die in Figur 2 dargestellte aufgerollte, spiralförmige Konfiguration A an.

Figur 1 zeigt das Strömungsleitelement 5 dagegen in seiner extendierten Konfiguration E. Diese wird angenommen, wenn über das Steuerdruckrohr 6 ein Druck bzw. ein Aufblasgas zugeführt wird. Der Luftschlauch des Strömungsleitelementes 5 füllt sich dabei mit dem Gas, wobei er zur Minimierung der mechanischen Energie ein größtmögliches Volumen anzunehmen versucht. Dieses größtmögliche Volumen erreicht er, wenn sich der Luftschlauch gerade ausstreckt, das heißt die extendierte Konfiguration E annimmt. Die über die Druckluft zugeführte Energie ist dabei groß genug, um die Gegenkraft durch die Vorspannfeder zu überwinden. Bei Anwendung eines geringeren Steuerdruckes bzw. bei einer geringeren Gasfüllung des Strömungsleitelementes 5 können auch Zwischenkonfigurationen zwischen der aufgerollten (A) und der extendierten (E) Konfiguration der Figuren 1 und 2 angenommen werden.

Das Strömungsleitelement 5 liegt, wenn es ausgestreckt wird, an seiner in den Figuren unteren Seite auf den bereits erwähnten Stützstegen 4a, 4b teilweise auf. Durch den Überdruck in der primären Kammer 1 relativ zur sekundären Kammer 2 wird das Strömungsleitelement 5 dabei (gegebenenfalls luftdicht) gegen die Stützstege 4a, 4b gedrückt. Die Stützstege 4a, 4b sorgen somit für eine Stabilisierung des Strömungsleitelementes 5 gegenüber der Luftströmung im Gehäuse 3.

Des Weiteren wirken das Strömungsleitelement 5 und die Stützstege 4a, 4b so zusammen, daß sie eine Trennwand variabler Länge zwischen der primären Kammer 1 und der sekundären Kammer 2 bilden. Hierdurch wird die effektive Länge des Strömungsweges für die Luft innerhalb des Gehäuses 3 in kontrollierter Weise veränderbar. Ein solcher längenveränderlicher Strömungsweg kann insbesondere im Ansaugkrümmer einer Brennkraftmaschine verwendet werden, wobei die Erfindung jedoch nicht auf diesen Anwendungsfall beschränkt ist, sondern überall dort eingesetzt werden kann, wo insbesondere hohe Volumina von Fluiden kontrolliert werden müssen.

Die in Figuren beispielhaft dargestellte Vorrichtung kann in vielerlei Hinsicht erweitert und abgeändert werden. So kann beispielsweise die Anzahl der Stützstege bzw. Stützelemente quasi beliebig gewählt werden, einschließlich Ausführungsformen mit nur einem einzigen Stützelement. Weiterhin kann auch die Form der Stützelemente 4a, 4b anders als gerade sein, beispielsweise spiralförmig oder radial verlaufend. In gleicher Weise kann die Form des Gehäuses 3 wie dargestellt gerade, aber auch zum Beispiel spiralförmig oder radial verlaufend sein.

Gemäß einer anderen Weiterbildung können mehrere Strömungsleitelemente 5 in einem Gehäuse 3 vorgesehen sein. Diese können dabei separat mit jeweils einem eigenen Bewegungsbereich angeordnet sein, es können jedoch auch zwei oder mehr Strömungsleitelemente einen überlappenden Bewegungsbereich haben. Beispielsweise könnten zwei Strömungsleitelemente 5 der in den Figuren dargestellten Art spiegelbildlich einander gegenüberliegend angeordnet sein, so daß sie aus entgegengesetzten Richtungen jeweils denselben Durchflußschlitz für Luft abdecken könnten. Durch eine gesteuerte Ausdehnung beider Strömungsleitelemente könnte dann zwischen diesen eine Durchflußöffnung beliebiger Breite an beliebiger Position erzeugt werden.

Schließlich könnten auch die Funktionen der Vorspannfeder und des Aufblasmechanismus vertauscht werden, das heißt, daß eine im Ruhezustand gestreckte Vorspannfeder das Strömungsleitelement in die extendierte Konfiguration treiben würde, aus welcher dieses durch Anlegen eines Unterdruckes (Leersaugen des Hohlraumes) oder eine andere aktive Beeinflussung in die aufgerollte Konfiguration überführt werden könnte. Ebenso könnte die Feder durch einen zweiten, durch Druck gesteuerten Schlauch ersetzt werden.

## Patentansprüche

1. Vorrichtung zur Steuerung eines Strömungsflusses, enthaltend
ein flexibles Strömungsleitelement (5), welches steuerbar zwischen einer aufgerollten Konfiguration (A) und einer extendierten Konfiguration (E) verändert werden kann,
**dadurch gekennzeichnet, daß**
das Strömungsleitelement (5) einen Hohlraum enthält und verschiedene Konfigurationen annehmen kann, welche von der Füllung des Hohlraumes mit einem Fluid abhängen.

2. Vorrichtung nach Anspruch 1,
**dadurch gekennzeichnet, daß**
das Strömungsleitelement (5) stationär in mindestens eine Konfiguration zwischen der aufgerollten Konfiguration (A) und der extendierten Konfiguration (E) gebracht werden kann.

3. Vorrichtung nach Anspruch 1 oder 2,
**dadurch gekennzeichnet, daß**
das Strömungsleitelement (5) ein Vorspannmittel enthält, welches es in die aufgerollte Konfiguration (A) oder die extendierte Konfiguration (E) vorspannt.

4. Vorrichtung nach Anspruch 3,
**dadurch gekennzeichnet, daß**
das Vorspannmittel eine im Ruhezustand spiralförmig aufgerollte Feder ist, welche das Strömungsleitelement (5) in die aufgerollte Konfiguration (A) vorspannt.

5. Vorrichtung nach mindestens einem der Ansprüche 1 bis 4,
**dadurch gekennzeichnet, daß**
der Hohlraum des Strömungsleitelementes (5) bei Füllung mit einem unter Druck stehenden Fluid eine Form annimmt, die der extendierten Konfiguration (E) entspricht.

6. Vorrichtung nach mindestens einem der Ansprüche 1 bis 5,
**dadurch gekennzeichnet, daß**
das Strömungsleitelement (5) in der extendierten Konfiguration (E) eine gestreckte Form aufweist.

7. Vorrichtung nach mindestens einem der Ansprüche 1 bis 6,
**dadurch gekennzeichnet, daß**
diese stationäre Stützelemente (4a, 4b) enthält, mit welchen das Strömungsleitelement (5) in Kontakt kommt, wenn es in die extendierte Konfiguration (E) überführt wird.

8. Strömungskanal mit variablem Strömungsweg, insbesondere Ansaugkrümmer (3) einer Brennkraftmaschine,
**gekennzeichnet durch**
eine Vorrichtung nach mindestens einem der Ansprüche 1 bis 7.

9. Strömungskanal nach Anspruch 8,
**dadurch gekennzeichnet, daß**
dieser durch das Strömungsleitelement (5) der Vorrichtung variabel in zwei gegenläufig durchströmte Kammern (1, 2) unterteilt wird.

10. Strömungskanal nach Anspruch 8 oder 9,
**dadurch gekennzeichnet, daß**
dieser mindestens zwei flexible Strömungsleitelemente (5) enthält, welche steuerbar zwischen einer aufgerollten Konfiguration (A) und einer extendierten Konfiguration (E) verändert werden können und welche einen überlappenden Bewegungsbereich haben.

## Claims

1. Device for controlling a flow, comprising
a flexible flow guide element (5) which can be adjusted in a controllable manner between a rolled-up configuration (A) and an extended configuration (E),
**characterized in that**
the flow guide element (5) comprises a hollow space and can assume different configurations which depend on the filling of the hollow space with a fluid.

2. Device according to Claim 1,
**characterized in that**
the flow guide element (5) can be brought to rest in at least one configuration between the rolled-up configuration (A) and the extended configuration (E).

3. Device according to Claim 1 or 2,
**characterized in that**
the flow guide element (5) comprises a prestressing means which prestresses it into the rolled-up configuration (A) or the extended configuration (E).

4. Device according to Claim 3,
**characterized in that**
the prestressing means is a spring which rolls up into a spiral shape when unloaded and prestresses the flow guide element (5) into the rolled-up configuration (A).

5. Device according to at least one of Claims 1 to 4,
**characterized in that**
when filled with a pressurized fluid, the hollow space of the flow guide element (5) assumes a shape which corresponds to the extended configuration (E).

6. Device according to one of Claims 1 to 5,
**characterized in that**
the flow guide element (5) has an elongated shape in the extended configuration (E).

7. Device according to at least one of Claims 1 to 6,
**characterized in that**
it comprises stationary support elements (4a, 4b) with which the flow guide element (5) comes into contact when the latter is adjusted into the extended configuration (E).

8. Flow duct having a variable flow path, in particular an intake manifold (3) of an internal combustion engine,
**characterized by**
a device according to at least one of Claims 1 to 7.

9. Flow duct according to Claim 8,
**characterized in that**
it is divided into two chambers (1, 2), through which flow passes in opposing directions, by means of the flow guide element (5) of the device.

10. Flow duct according to Claim 8 or 9,
**characterized in that**
it comprises at least two flexible flow guide elements (5) which can be adjusted in a controllable manner between a rolled-up configuration (A) and an extended configuration (E) and which have an overlapping movement region.

## Revendications

1. Dispositif de commande d'un flux de courant, contenant un élément de guidage de courant (5), qui peut être modifié de manière commandable entre une configuration enroulée (A) et une configuration étendue (E),
**caractérisé en ce que**
l'élément de guidage de courant (5) contient un espace creux et peut prendre différentes configurations qui dépendent du remplissage de l'espace creux avec un fluide.

2. Dispositif selon la revendication 1,
**caractérisé en ce que**
l'élément de guidage de courant (5) peut être monté de manière stationnaire dans au moins une configuration entre la configuration enroulée (A) et la configuration étendue (E).

3. Dispositif selon la revendication 1 ou 2,
**caractérisé en ce que**
l'élément de guidage de courant (5) contient un moyen de précontrainte qui le précontraint dans la configuration enroulée (A) ou dans la configuration étendue (E).

4. Dispositif selon la revendication 3,
**caractérisé en ce que**
le moyen de précontrainte est un ressort enroulé en spirale dans l'état de repos, qui précontraint l'élément de guidage de courant (5) dans la configuration enroulée (A).

5. Dispositif selon l'une quelconque des revendications 1 à 4,
**caractérisé en ce que**
l'espace creux de l'élément de guidage de courant (5), lors du remplissage avec un fluide sous pression, prend une forme qui correspond à la configuration étendue (E).

6. Dispositif selon l'une quelconque des revendications 1 à 5,
**caractérisé en ce que**
l'élément de guidage de courant (5) présente une forme étirée dans la configuration étendue (E).

7. Dispositif selon l'une quelconque des revendications 1 à 6,
**caractérisé en ce**
**qu'**il contient des support stationnaires (4a, 4b) avec lesquels l'élément de guidage de courant (5) vient en contact lorsqu'il est transféré dans la configuration étendue (E).

8. Canal d'écoulement avec une distance d'écoulement variable, notamment collecteur d'admission (3) d'un moteur à combustion interne,
**caractérisé par**
un dispositif selon l'une quelconque des revendications 1 à 7.

9. Canal d'écoulement selon la revendication 8,
**caractérisé en ce que**
celui-ci est divisé par l'élément de guidage de courant (5) du dispositif de manière variable en deux chambres (1, 2) parcourues en sens inverse.

10. Canal d'écoulement selon la revendication 8 ou 9,
**caractérisé en ce que**
celui-ci contient au moins deux éléments de guidage de courant (5) flexibles, qui peuvent être modifiés de manière commandable entre une configuration enroulée (A) et une configuration étendue (E) et qui ont une région de déplacement se chevauchant.
